# EUROPÄISCHE PATENTANMELDUNG

(11) **EP 3 518 002 A1**
(43) Veröffentlichungstag der Anmeldung: **31.07.2019**
(21) Anmeldenummer: 18153465.2
(22) Anmeldetag: 25.01.2018
(51) Int. Cl.: G01S 17/93, G01S 7/486, G01S 7/497, G01S 7/481

(54) **VERFAHREN UND VORRICHTUNG ZUR OPTISCHEN DISTANZMESSUNG**

(71) Anmelder: Ibeo Automotive Systems GmbH, 22143 Hamburg (DE)
(72) Erfinder: Püskül, Özgür, 22143 Hamburg (DE)
(74) Vertreter: RGTH

(57) **Zusammenfassung**

Es wird ein Verfahren (100) zur optischen Distanzmessung vorgeschlagen, das das Aussenden (107) von Messpulsen mittels einer Sendematrix umfassend eine Vielzahl von Sendeelementen, die Reflektion (108) von ausgesandten Messpulsen an mindestens einem Objekt und das Empfangen (109) von reflektierten Messpulsen mittels einer Empfangsmatrix (11) umfasst. Die Empfangsmatrix (11) umfasst eine Vielzahl von Empfangselementen (12) jeweils umfassend eine Vielzahl von Empfangsunterelementen (13). Das Verfahren weist eine Überwachung (101) von Empfangsraten von Empfangsunterelementen (13) der Empfangsmatrix (11) zum Feststellen (112) einer Fehlausrichtung zwischen der Sendematrix und der Empfangsmatrix (11) auf.

## Beschreibung

### Technisches Gebiet

Die Erfindung betrifft ein Verfahren sowie eine Vorrichtung zur optischen Distanzmessung.

### Stand der Technik

LIDAR (Abkürzung für "light detection and ranging") Sensoren sind aus dem Stand der Technik bekannt. Sie umfassen eine Sendematrix zum Aussenden von Messpulsen sowie eine Empfangsmatrix zum Empfangen von reflektierten Messpulsen, die an Objekten innerhalb des Messbereichs des Sensors reflektiert wurden. Anhand des Time of Flight-Prinzips wird mithilfe der Lichtgeschwindigkeit auf die Distanz zu den Objekten, an denen die Messpulse reflektiert wurden, geschlossen. Derartige 3D-LIDAR-Sensoren sind allerdings sehr anfällig für eine Fehlausrichtung zwischen der Sendematrix und der Empfangsmatrix. Liegt eine Fehlausrichtung vor, kommt es zu einer verminderten Reichweite des 3D-LIDAR-Sensors, oder im Falle einer starken Fehlausrichtung sogar zu einem blinden Fleck der Distanzmessung.

### Darstellung der Erfindung: Aufgabe, Lösung, Vorteile

Der Erfindung liegt die Aufgabe zugrunde, ein Verfahren sowie eine Vorrichtung zur Distanzmessung derart zu verbessern, dass die Reichweite, in anderen Worten der Messbereich, in dem auf die Distanz zu Objekten geschlossen werden kann, maximiert wird.

Gelöst wird die oben genannte Aufgabe durch ein Verfahren zur optischen Distanzmessung, das das Aussenden von Messpulsen mittels einer Sendematrix, die Reflektion von ausgesandten Messpulsen an mindestens einem Objekt und das Empfangen von reflektierten Messpulsen mittels einer Empfangsmatrix umfasst. Die Sendematrix umfasst eine Vielzahl von Sendeelementen, während die Empfangsmatrix eine Vielzahl von Empfangselementen umfasst. Ferner weisen die Empfangselemente jeweils eine Vielzahl von Empfangsunterelementen auf. Das Verfahren umfasst eine Überwachung von Empfangsraten von Empfangsunterelementen der Empfangsmatrix um eine Fehlausrichtung zwischen der Sendematrix und der Empfangsmatrix festzustellen. Insbesondere werden die Empfangsraten von reflektierten und empfangenen Messpulsen von Empfangsunterelementen überwacht.

Bei dem von dem Objekt reflektierten Messpuls handelt es sich um einen Messpuls, der zuvor ausgesendet wurde, sodass sich durch die Reflektion an dem Objekt seine Ausbreitungsrichtung verändert hat. Man kann den reflektierten Messpuls somit als Echo des ausgesendeten Messpulses verstehen. Insbesondere wird mittels des Verfahrens die Laufzeit der Messpulse zu den Objekten, an denen diese reflektiert wurden, ermittelt und aus dieser mithilfe der Lichtgeschwindigkeit die von dem jeweiligen Messpuls zurückgelegte Distanz zu dem Objekt bestimmt. Dabei müssen nicht sämtliche ausgesandte Messpulse an Objekten reflektiert werden, sondern es sein kann, dass Messpulse an keinem Objekt reflektiert werden und somit nicht in Form eines reflektierten Messpulses von der Empfangsmatrix empfangen werden.

Eine optische Distanzmessung zeichnet sich dadurch aus, dass unter Ausnutzung von optischen Signalen, hier optischen Messpulsen, Distanzen bestimmt werden. Unter dem Begriff "Distanz" ist eine Entfernung zu verstehen. Unter der vom Messpuls zurückgelegten Distanz ist die Strecke zwischen dem Sendeelement, das den Messpuls ausgesandt hat, und dem Objekt, das diesen reflektiert hat, plus der Strecke zwischen dem Objekt und dem Empfangselement, das den entsprechenden reflektierten Messpuls empfangen hat, zu verstehen. Insbesondere umfasst das Verfahren die Berücksichtigung der genauen Position des Sendeelementes und des Empfangselementes, insbesondere in Relation zueinander. Da es sich bei dem mindestens einen Objekt typischerweise um ein dreidimensionales Objekt handelt, sodass einige Bereiche des Objektes näher und andere Bereiche des Objektes weiter entfernt angeordnet sein können, ist mit dem Begriff "Distanz zu dem Objekt" die Entfernung zu zumindest einer Stelle des Objektes gemeint, und zwar der Stelle, auf die der Messpuls aufgetroffen und an der diese reflektiert wurde. Mit Laufzeit ist die Zeit zu verstehen, die der Messpuls für die zuvor beschriebene Distanz gebraucht hat. Das Verfahren dient vor allem zur Distanzmessung zur Anwendung in der fahrerlosen Navigation von Fahrzeugen. Dafür werden die Distanzen zu sämtlichen Objekten, die in einem Messbereich liegen, bestimmt.

Bei einem Messpuls handelt es sich insbesondere um ein optisches, insbesondere elektromagnetisches, Signal. Der Messpuls ist vorteilhafterweise ein Lichtpuls, das heißt ein Puls mit einer Wellenlänge aus dem für das menschliche Auge sichtbaren Bereich des elektromagnetischen Spektrum. Bevorzugterweise weist ein Messpuls eine Pulsdauer auf, sodass man den Messpuls als eine zeitlich begrenzte Portion elektromagnetischer Strahlung verstehen kann. Da es sich beim Messpuls um ein elektromagnetisches Signal handelt und somit die Geschwindigkeit des Messpulses bekannt ist, kann aus der Laufzeit eines Messpulses mithilfe der Lichtgeschwindigkeit darauf geschlossen werden, welche Strecke der Messpuls in der Laufzeit hinter sich gebracht hat.

Unter dem Begriff "Sendematrix" ist insbesondere ein Array von Sendeelementen zu verstehen. Eine Matrix kann insbesondere als dreidimensional, insbesondere plattenförmiger, Körper verstanden werden, auf dessen einen Oberfläche die entsprechenden Elemente, Sendeelemente oder Empfangselemente, angeordnet sind. Vorzugsweise handelt es sich bei den Sendeelementen jeweils um einen Laser, sodass die Sendematrix als Laser-Array zu verstehen ist.

Bei der Empfangsmatrix handelt es sich insbesondere um eine fotosensitive Flächenmatrix. Dies bedeutet, dass eine Oberfläche der Empfangsmatrix fotosensitiv ausgebildet ist und sich somit zum Empfangen von zuvor von der Sendematrix ausgesandten und an Objekten reflektierten Messpulsen eignet. Insbesondere handelt es sich bei der Empfangsmatrix um einen Zellendetektor aus Dioden, insbesondere Avalanche-Photodioden, am meisten bevorzugt Einzelphoton-Avalanche-Dioden, oder Pin-Dioden.

Die Empfangsmatrix umfasst Empfangselemente und Empfangsunterelemente. Die Empfangsunterelemente zeichnen sich dadurch aus, dass sie eine Untereinheit der Empfangselemente darstellen. Insbesondere handelt es sich bei den Empfangselementen um Pixel, während die Empfangsunterelemente durch Subpixel gebildet werden. Die Empfangselemente der Empfangsmatrix sind insbesondere in Zeilen und Spalten angeordnet, wobei die Zeilen untereinander und die Spalten untereinander einen konstanten Abstand zueinander aufweisen können oder deren Abstand variieren kann.

Insbesondere umfasst ein Empfangselement mindestens zwei, insbesondere mindestens vier, besonders bevorzugt 16, Empfangsunterelemente. Die Empfangsmatrix selber umfasst insbesondere eine Vielzahl von Empfangselementen, die vor allem in 128 Zeilen und 256 Spalten angeordnet sind.

Vorzugsweise umfasst das Verfahren die Definition der Empfangselemente und der Empfangsunterelemente innerhalb der Empfangsmatrix. Insbesondere umfasst die Definition die genaue örtliche Platzierung der Empfangselemente und Empfangsunterelemente, in anderen Worten eine Festlegung deren Koordinaten innerhalb der fotosensitiven Oberfläche der Empfangsmatrix.

Das erfindungsgemäße Verfahren sieht vor, dass von mindestens zwei Empfangsunterelementen der Empfangsmatrix die Empfangsraten überwacht werden. Typischerweise wird ein reflektierter Messpuls aufgrund seines Durchmessers auf mehr als ein Empfangsunterelement der Empfangsmatrix abgebildet. Die Empfangsrate ist vorzugsweise als Anzahl der mithilfe des entsprechenden Empfangsunterelementes empfangenen Photonen des Messpulses zu verstehen. Der Einfachheit halber werden Empfangselemente, von denen Empfangsunterelemente überwacht werden, als überwachte Empfangselemente bezeichnet. Die Überwachung umfasst das Bestimmen der Empfangsrate zu verschiedenen Zeitpunkten und die Beobachtung des zeitlichen Verhaltens der Raten. Ferner kann die Überwachung einen Vergleich der Empfangsraten der überwachten Empfangsunterelemente desselben Empfangselementes umfassen. Dies dient vorteilhaferweise dazu eine "Verschiebung" einer Abbildung eines Messpulses auf die überwachten Empfangsunterelemente zu ermitteln.

Insbesondere werden Empfangsraten von Empfangsunterelementen von mindestens zwei Empfangselementen überwacht. Es werden somit vorteilhafterweise Empfangsunterelemente von unterschiedlichen Empfangselementen überwacht. Die Überwachung von mehr als zwei Empfangselementen ist vorteilhaft, um sämtliche optisch mögliche Fehlausrichtungen, insbesondere geometrischen Verschiebungen und Krümmungen, zwischen Sendematrix und Empfangsmatrix zu erfassen.

Insbesondere umfasst das Verfahren eine Zuordnung von Sendeelementen der Sendematrix zu Empfangselementen der Empfangsmatrix. Ferner umfasst das Verfahren eine Abstimmung von Sendeelementen zu den zugeordneten Empfangselementen. In anderen Worten wird festgelegt und durch entsprechende Anordnung der Sendematrix zur Empfangsmatrix umgesetzt, auf welche Empfangsunterelemente der Empfangselemente die Messpulse des jeweiligen Sendeelementes abgebildet werden. In einem weiteren Schritt umfasst das Verfahren die Definition von zu überwachenden Empfangselementen und Empfangsunterelementen. Die zu überwachenden Empfangsunterelemente sind vorteilhafterweise genau die Empfangsunterelemente, auf die die Messpulse der Sendeelemente abgebildet werden.

Für eine maximale Reichweite der Distanzmessung ist es vorteilhaft, wenn keine Fehlausrichtung der Sendematrix auf die Empfangsmatrix vorliegt. Optimalerweise ist somit die Sendematrix exakt auf die Empfangsmatrix abgestimmt. In anderen Worten werden die jeweiligen Messpulse exakt auf insbesondere einen zentralen Bereich der Empfangselemente abgebildet. Durch eine Überwachung der Empfangsraten kann festgestellt werden, ob die Abstimmung zwischen Sendematrix und Empfangsmatrix noch optimal ist. Hat sich die Ausrichtung verschoben, werden sich die Empfangsraten entsprechend verändern. Somit kann eine Fehlausrichtung auf effektive Art und Weise erkannt werden. Eine Fehlausrichtung liegt dann vor, wenn ein Messpuls eines Sendeelementes nicht mehr in einem zentralen Bereich des entsprechenden Empfangselementes abgebildet wird beziehungsweise gar nicht mehr auf das Empfangselement abgebildet wird.

Bei dem Verfahren handelt es sich insbesondere um kein Flash-Verfahren, sondern um ein scannendes Verfahren, bei dem Sendeelemente der Sendematrix sequentiell, insbesondere nach Zeilen und/oder Spalten, angesteuert werden.

Vorteilhafterweise wird das Verfahren zur Navigation eines Fahrzeuges eingesetzt, insbesondere einer fahrerlosen Navigation eines Fahrzeuges, wobei die Überwachung während einer Fahrt des Fahrzeuges durchgeführt wird. Es handelt sich somit bei der Überwachung vor allem um eine dynamische Überwachung, die während einer optischen Distanzmessung stattfinden kann. Insbesondere werden Messdaten, die zur Überwachung einer der Empfangsraten und somit einer potenziellen Feststellung einer Fehlausrichtung verwendet werden, gleichzeitig auch zur Distanzmessung zu Objekten eingesetzt.

Bevorzugterweise definieren die Sendematrix und die Empfangsmatrix einen Messbereich, in anderen Worten ein Sichtfeld, aus dem Reflektionen zu erwarten sind. Die Länge des Sichtfeldes beziehungsweise des Messbereichs wird insbesondere als Reichweite des Verfahrens beziehungsweise einer Vorrichtung zur Durchführung des Verfahrens bezeichnet. Zur Feststellung einer Fehlausrichtung werden Messpulse in den Messbereich ausgesandt und deren Reflektionen empfangen nach Reflektion an Objekten, die sich im Messbereich befinden. Auf Basis der empfangenen Messpulse werden die Empfangsraten der überwachten Empfangsunterelemente bestimmt und überwacht. Dabei umfasst das Verfahren insbesondere kein bewusstes Einbringen von Messobjekten in das Sichtfeld, anhand derer eine Fehlausrichtung festgestellt werden soll. Vielmehr findet die Überwachung auf Basis von zufällig im Sichtfeld befindlichen Objekten statt. Es wird demnach gezielt kein Messobjekt in das Sichtfeld eingebracht, das lediglich der Überwachung einer Fehlausrichtung dient, sondern die Überwachung kann während einer Fahrt eines Fahrzeuges, anhand von realen Objekten, das heißt nicht bewusst in das Sichtfeld eingebrachten Objekten, bestimmt werden. Dies ermöglicht eine dynamische Überwachung. Durch die dynamische Fehlausrichtungsfeststellung sind geringere Anforderungen an die Justage von Sendematrix und Empfangsmatrix gegeben, da eine mögliche Fehlausrichtung sofort erkannt und korrigiert werden kann. Ferner resultiert diese in einer Aufweichung der Justagetoleranzen. Die Komplexität des Optikträgers der Empfangsmatrix zur Vermeidung von hohen Toleranzen wird reduziert. Ferner kann eine maximale Reichweite über alle Umfeldbedingungen hinweg garantiert werden, während gleichzeitig das Signalrauschverhältnis optimiert wird.

Bevorzugterweise umfasst das Verfahren das Deaktivieren von nicht überwachten Empfangsunterelementen, während überwachte Empfangsunterelemente aktiv sind.

Insbesondere werden die Empfangsraten von jeweils mindestens zwei Empfangsunterelementen von mindestens drei, bevorzugterweise mindestens fünf, am meistens bevorzugt mindestens neun, Empfangselementen überwacht.

Insbesondere ist mindestens ein überwachtes Empfangselement in einer äußersten Zeile oder einer äußersten Spalte der Empfangsmatrix angeordnet. Insbesondere umfassen die überwachten Empfangselemente die Empfangselemente, die die Ecken der Empfangsmatrix bilden.

Im Falle von drei überwachten Empfangselementen sind diese vorzugsweise in einem Dreieck angeordnet, während bei der Überwachung von vier Empfangselementen eine viereckige Anordnung von Vorteil ist. Bei fünf Empfangselementen ist vor allem eine viereckige Anordnung mit einem Empfangselement in der Mitte am meistens bevorzugt (analog zu der Darstellung einer Fünf mithilfe von Punkten auf einem Würfel). Werden neun Empfangselemente zur Überwachung herangezogen, sind diese insbesondere in drei Reihen und drei Spalten angeordnet (analog zu der Darstellung einer Neun mithilfe von Punkten auf einem Würfel).

Vorteilhafterweise werden die Empfangsraten von mindestens zwei, insbesondere mindestens drei, am meisten bevorzugt mindestens vier, Empfangsunterelementen pro Empfangselement überwacht. Die überwachten Empfangsunterelemente sind insbesondere in einem zentralen Bereich innerhalb des entsprechenden Empfangselementes angeordnet. Insbesondere bilden die zwei, drei oder vier Empfangsunterelemente die inneren, zentral angeordneten Empfangsunterelemente des überwachten Empfangselementes.

Beim Feststellen einer Fehlausrichtung zwischen der Sendematrix und der Empfangsmatrix wird insbesondere eine Neudefinition von Empfangselementen und/oder Empfangsunterelementen durchgeführt. Zuvor örtlich definierte Empfangselemente und/oder Empfangsunterelemente werden auf Basis der Fehlausrichtung neu definiert. Insbesondere findet eine Veränderung der Koordinaten der Empfangsunterelemente auf der fotosensitiven Fläche der Empfangsmatrix statt. Somit kann eine Fehlausrichtung korrigiert werden.

Ferner kann bei Feststellen einer Fehlausrichtung zwischen der Sendematrix und der Empfangsmatrix eine Neuzuordnung von Sendeelementen zu Empfangselementen stattfinden. In anderen Worten wird die Abstimmung zwischen Sendeelementen und Empfangselementen beziehungsweise Empfangsunterelementen neu festgelegt, sodass die Fehlausrichtung ausgeglichen wird. Beispielsweise können, insbesondere wenn die Auflösung der Sendematrix der der Empfangsunterelemente entspricht, bei Fehlausrichtungen benachbarte Sendeelemente verwendet werden statt der durch vorherige Definition bestimmten Sendeelemente.

Insbesondere können Empfangselemente der Empfangsmatrix einem Bodenbereich des Messbereiches zugeordnet werden. Die Sendematrix und die Empfangsmatrix sind demnach derart angeordnet, dass diese Empfangselemente Messpulse empfangen, die zuvor am Boden oder in Bodennähe befindlichen Objekten reflektiert wurden. Insbesondere werden die Empfangsraten von Empfangsunterelementen von Empfangselementen überwacht, die einem Bodenbereich zugeordnet werden können. Dies ist aus dem Grund besonders vorteilhaft, da unabhängig von einer Umgebung des Fahrzeuges, zumindest sehr regelmäßig Reflektionen aus dem Bodenbereich zu erwarten sind. Somit kann eine regelmäßige Überwachung gewährleistet werden.

Besonders bevorzugt werden die Empfangsraten der überwachten Empfangsunterelemente eines Empfangselementes mittels einer jeweils zugeordneten Auswerteeinheit bestimmt. Es werden somit die überwachten Empfangsunterelemente, die demselben Empfangselement zugeordnet werden können, separat ausgewertet, indem jedem einzelnen der Empfangsunterelemente eine eigene Auswerteeinheit zugeordnet ist. Die Auswerteeinheit ist vor allem dazu ausgebildet, die empfangenen Messpulse in digitale Daten umzuwandeln. Bei der Auswerteeinheit handelt es sich insbesondere um einen Time-to-Digital Converter. Die den überwachten Empfangsunterelementen zugeordneten Auswerteeinheiten dienen vor allem ausschließlich dazu, die Empfangsraten der überwachten Empfangsunterelemente zu bestimmen und überwachen.

Den Auswerteeinheiten können weitere Empfangsunterelemente des jeweiligen Empfangselementes zugeordnet sein. Vor allem können einer Auswerteeinheit vier Empfangsunterelemente zugeordnet werden. Insbesondere sind die weiteren zugeordneten Empfangsunterelemente während der Bestimmung einer Empfangsrate allerdings deaktiviert, sodass nur ein aktives Empfangsunterelement einer Auswerteeinheit zugeordnet ist. Es werden somit mithilfe einer Auswerteeinheit ganz gezielt ausschließlich Photonen "gezählt", die von einem einzigen überwachten Empfangsunterelement stammen. In anderen Worten wird eine 1:1 Zuordnung zwischen Auswerteeinheit und überwachtem Empfangsunterelement pro Zeit erreicht. Durch Multiplexing können die Auswerteeinheiten zu einem anderen Zeitpunkt je einem anderen überwachten Empfangsunterelement eines anderen Empfangselementes, bspw. eines Empfangselementes einer anderen Spalte oder Zeile, zugeordnet sein.

Die Empfangselemente der Empfangsmatrix sind insbesondere in Zeilen und Spalten angeordnet, wobei die Empfangsraten von überwachten Empfangsunterelementen von innerhalb derselben Zeile oder Spalte angeordneten Empfangselementen gleichzeitig ausgewertet werden. In anderen Worten werden überwachte Empfangselemente, die sich in derselben Zeile oder derselben Spalte befinden, gleichzeitig ausgewertet. Da es sich bei dem Verfahren um ein scannendes Verfahren handelt, wird zur Auswertung dieser in derselben Spalte oder Zeile befindlichen Empfangselemente die entsprechende Zeile oder Spalte der Sendematrix angesteuert, sodass diese die dort angeordneten Sendeelemente Messpulse aussenden. Empfangselemente weiterer Zeilen oder Spalten werden durch sequentielles Ansteuern der Sendematrix ausgeleuchtet und durch ein Anbinden der Spalten und/oder Zeilen der Empfangsmatrix über einen Multiplexer an die Ausweitereinheiten angebunden.

Die bestimmten Empfangsraten der überwachten Empfangsunterelemente werden in einer Tabelle hinterlegt. Bei dieser Tabelle handelt es sich insbesondere um eine Look-up-Tabelle. Die Daten der Look-up-Tabelle werden vor allem auch für weitere Berechnungen für die Distanzmessung, beispielsweise für eine Erkennung der Objekte, an denen die Messpulse reflektiert werden, eingesetzt. Insbesondere können die Daten zur Reichweiteneinschätzung verwendet werden.

In einem weiteren Aspekt betrifft die Erfindung eine Vorrichtung zur optischen Distanzmessung, die zur Überwachung von Empfangsraten von Empfangsunterelementen einer Empfangsmatrix der Vorrichtung zum Feststellen einer Fehlausrichtung zwischen einer Sendematrix und der Empfangsmatrix ausgebildet ist.

Die Sendematrix der Vorrichtung dient zum Aussenden von Messpulsen und umfasst eine Vielzahl von Sendeelementen, während die Empfangsmatrix zum Empfang von reflektierten Messpulsen dient und eine Vielzahl von Empfangselementen umfasst. Die Empfangselemente umfassen eine Vielzahl von Empfangsunterelementen. Bevorzugterweise sind die Sendematrix und/oder die Empfangsmatrix ausgebildet wie oben beschrieben. Insbesondere ist die Vorrichtung als 3D-LIDAR-Sensor ausgebildet.

Vorzugsweise ist jedem der überwachten Empfangsunterelemente eines Empfangselementes eine eigene Auswerteeinheit zur Bestimmung der Empfangsrate des jeweiligen Empfangsunterelementes zugeordnet. Werden beispielsweise zwei Empfangsunterelemente eines Empfangselementes überwacht, ist jedem der beiden eine eigene Auswerteeinheit zugeordnet. Neben den überwachten Empfangsunterelementen zugeordneten Auswerteeinheiten, die vor allem ausschließlich dazu dienen, die Empfangsraten der überwachten Empfangsunterelemente zu bestimmen, kann die Vorrichtung noch weitere Auswerteeinheiten, insbesondere Time-to-Digital Converter, umfassen, die ausschließlich dazu dienen, die Distanz zu Objekten im Messbereich zu ermitteln. Insbesondere kann jeder Zeile oder Spalte der Empfangsmatrix eine Auswerteeinheit zugeordnet sein, die aufgrund von Multiplexing sämtliche Empfangselemente der jeweiligen Zeile oder Spalte auswerten kann.

Die Erfindung betrifft ferner ein Computerprogrammprodukt, das ein computerlesbares Speichermedium umfasst, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung durchzuführen. Zudem bezieht sich die Erfindung auf ein computerlesbares Speichermedium, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung durchzuführen.

### Kurze Beschreibung der Zeichnungen

Es zeigen schematisch:
- Figur 1: ein Verfahrensschema eines erfindungsgemäßen Verfahrens;
- Figur 2: eine Draufsicht auf eine erfindungsgemäße Vorrichtung;
- Figur 3: eine Draufsicht auf ein Empfangselement einer Empfangsmatrix nach Figur 2; und
- Figur 4: die Verschaltung der Empfangsunterelemente des Empfangselementes nach Figur 3.

### Bevorzugte Ausführungsformen der Erfindung

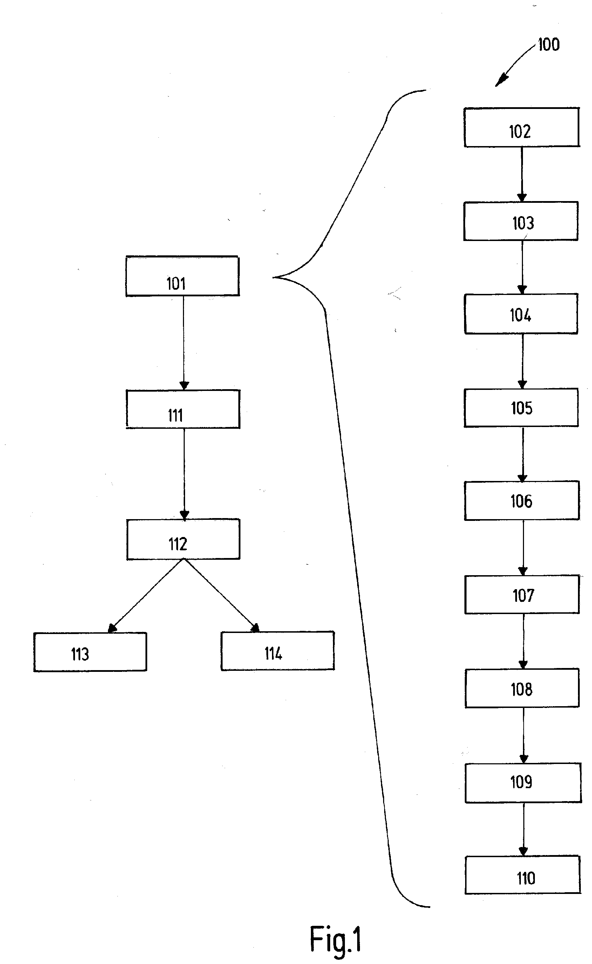

Figur 1 zeigt ein Verfahrensschema eines erfindungsgemäßen Verfahrens (100) zur Distanzmessung.

Das Verfahren (100) umfasst die Überwachung (101) von Empfangsraten von reflektierten und empfangenen Messpulsen von Empfangsunterelementen (13) einer Empfangsmatrix (11). In einem ersten Schritt umfasst die Überwachung (101) vorzugsweise eine Definition (102) von Empfangselementen (12) und/oder Empfangsunterelementen (13) der Empfangsmatrix (11). Ferner können Sendeelemente einer Sendematrix zu Empfangselementen (12) der Empfangsmatrix (11) zugeordnet werden (103). Es folgt insbesondere eine Definition (104) von zu überwachenden Empfangselementen (12) und Empfangsunterelementen (13). Jedem der überwachten Empfangsunterelemente (13) eines Empfangselementes (12) kann eine eigene Auswerteeinheit (17) zugeordnet werden (105). Nicht überwachte Empfangsunterelemente (13) können deaktiviert werden (106), während überwachte Empfangsunterelemente (13) aktiviert werden können. Nach dem Aussenden (107) von Messpulsen und deren Reflektion (108) an mindestens einem Objekt in einem Messbereich werden die reflektierten Messpulse empfangen (109). Das Aussenden (107) von Messpulsen erfolgt insbesondere sequentiell, sodass Zeilen oder Spalten der Sendematrix nacheinander aktiviert werden und somit einen Messpuls aussenden. Insbesondere werden Messpulse ausschließlich von Sendeelementen ausgesandt, die den überwachten Empfangselementen (12) zugeordnet sind.

Da nicht überwachte Empfangsunterelemente (13) vorzugsweise deaktiviert sind, können die Messpulse, die an mindestens einem Objekt reflektiert wurden, ausschließlich von den aktivierten überwachten Empfangsunterelementen (13) empfangen werden. Von den überwachten Empfangsunterelementen (13) wird jeweils eine Empfangsrate bestimmt (110). Diese Bestimmung (110) erfolgt insbesondere mittels der jeweils zugeordneten Auswerteeinheiten (17). Insbesondere werden die Empfangsraten von überwachten Empfangsunterelementen (13) von innerhalb derselben Zeile oder derselben Spalte der Empfangsmatrix (11) angeordneten Empfangselementen (12) gleichzeitig ausgewertet.

Die bestimmten Empfangsraten werden in einer Tabelle (23), einer Look-up Tabelle, eingetragen (111). Insbesondere erfolgen die Schritte der Deaktivierung (106) von nicht überwachten Empfangsunterelementen (13) bis zum Eintragen (111) der Empfangsraten in eine Look-up-Tabelle regelmäßig, sodass eine zeitliche Beobachtung der Entwicklung der Empfangsraten und somit eine Überwachung (101) möglich ist. Sobald eine Fehlausrichtung zwischen der Sendematrix und der Empfangsmatrix (11) festgestellt wird (112), kann als Reaktion eine Neudefinition (113) von Empfangselementen (12) und/oder Empfangsunterelementen (13), das heißt ein Umdefinieren der Koordinaten der Empfangselemente (12) und/oder Empfangsunterelemente (13), durchgeführt werden und somit die Fehlausrichtung korrigiert werden. Eine weitere Reaktion, alternativ oder zusätzlich, wäre eine Neuzuordnung (114) von Sendeelementen der Sendematrix zu Empfangselementen (12) der Empfangsmatrix.

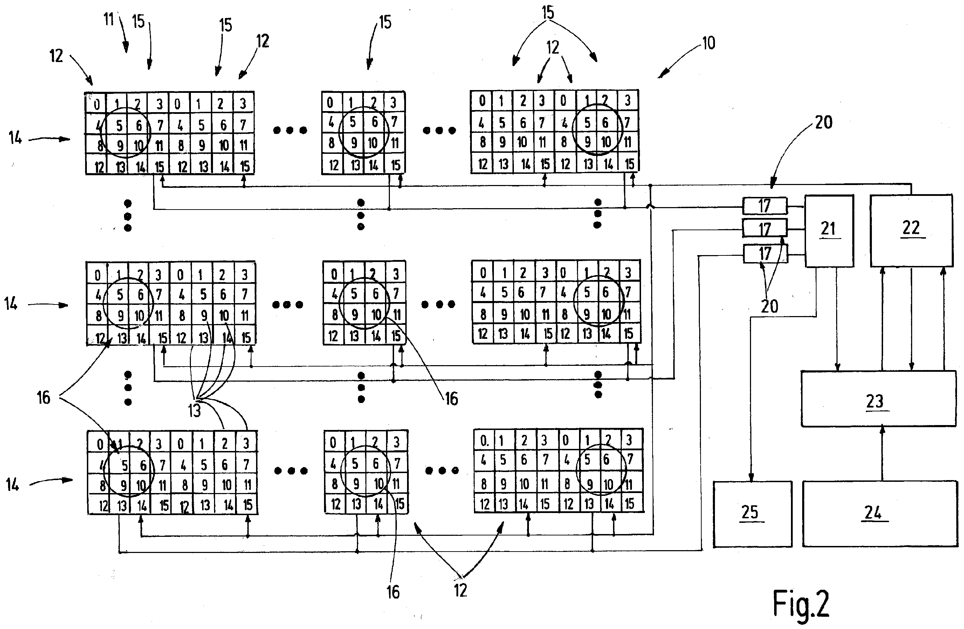

Figur 2 zeigt eine Draufsicht auf eine Vorrichtung (10) zur optischen Distanzmessung.

Die Vorrichtung (10) umfasst eine Empfangsmatrix (11). Die Empfangsmatrix (11) umfasst Empfangselemente (12), die in Zeilen (14) und Spalten (15) angeordnet sind. Insgesamt umfasst die Empfangsmatrix (11) 256 Spalten (15) und 128 Zeilen (14). In Figur 2 sind nicht sämtliche Empfangselemente (12) der Empfangsmatrix (11) gezeigt, sondern nur ein Teil dieser. Die Zeilen (14) und Spalten (15) der Empfangsmatrix (11) in Figur 2 sind mit Zahlen beschriftet, angefangen mit 0 in der linken oberen Ecke bis 127 in der linken unteren Hälfte betreffend die Zeilen (14), sowie angefangen mit 0 in der linken oberen Ecke bis 255 in der rechten oberen Ecke hinsichtlich der Spalten (15). Jedes Empfangselement (12) ist somit eindeutig durch Angabe der Zeilennummer und der Spaltennummer definiert, wobei die erste Zahl die Zeile angibt und die zweite Zahl die Spalte, in der das Empfangselemente (12) angeordnet ist. Als Beispiel ist das Empfangselement (12) in der linken oberen Ecke der Empfangsmatrix (11) mit 0/0 eindeutig bezeichnet.

Jedes Empfangselement (12) umfasst eine Vielzahl von Empfangsunterelementen (13). Genauer umfasst jedes Empfangselement (12) 16 Empfangsunterelemente (13), die durch Angabe einer Zahl zwischen 0 und 15 eindeutig in Figur 2 bestimmt sind. Im vorliegenden Beispiel werden Empfangsunterelemente (13) von neun Empfangselementen (12) überwacht. Der Einfachheit halber werden Empfangselemente (12), von denen Empfangsunterelemente (13) überwacht werden, als überwachte Empfangselemente (12) bezeichnet.

Die neun überwachten Empfangselemente (12) werden durch die vier Empfangselemente in den Ecken der Empfangsmatrix (11) gebildet, nämlich durch die Empfangselemente 0/0, 0/255, 127/0, 127/255. Ferner wird das Empfangselement (12) in der Mitte der Empfangsmatrix (11) überwacht, nämlich das Empfangselement 63/127. Zudem werden die Empfangselemente (12) überwacht, die sich in der Mitte zwischen den überwachten Empfangselementen (12) in den Ecken befinden, nämlich die Empfangselemente 63/0, 0/127, 63/255, 127/127.

Das Verfahren sieht vor, die den überwachten Empfangselementen (12) zugeordneten Sendeelemente der Sendematrix sequentiell nach Spalten anzusteuern. Durch das sequentielle Ansteuern nach Spalten wird zunächst Spalte 0 beleuchtet, wobei dieser zeitliche Augenblick in Figur 2 zu sehen ist. Somit kann der Figur eindeutig entnommen werden, wie ein Messpuls auf die Empfangsmatrix (11) abgebildet wird. Man kann deutlich die Abbildung (16) der drei Messpulse der entsprechenden Sendeelemente zu den überwachten Empfangselementen (12) der Spalte 0 sehen. Die Abbildung (16) ist in anderen Worten ein Laserspot, so wie er auf der Empfangsmatrix (11) abgebildet wird. Die Abbildung (16) ist im Wesentlichen auf vier Empfangsunterelemente (13), und zwar die zentralen vier Empfangsunterelemente (13) mit den Ziffern 5, 6, 9 und 10 abgebildet. Genau diese Empfangsunterelemente (13), auf die die Abbildung (16) trifft beziehungsweise treffen soll, werden überwacht. Dafür werden die restlichen nicht überwachten Empfangsunterelemente (13), nämlich 0, 1, 2, 3, 4, 7, 8, 11, 12, 13, 14, 15, deaktiviert. Aktivierte Empfangsunterelemente (13) sind in der Figur 2 weiß dargestellt, während nicht aktivierte grau dargestellt sind.

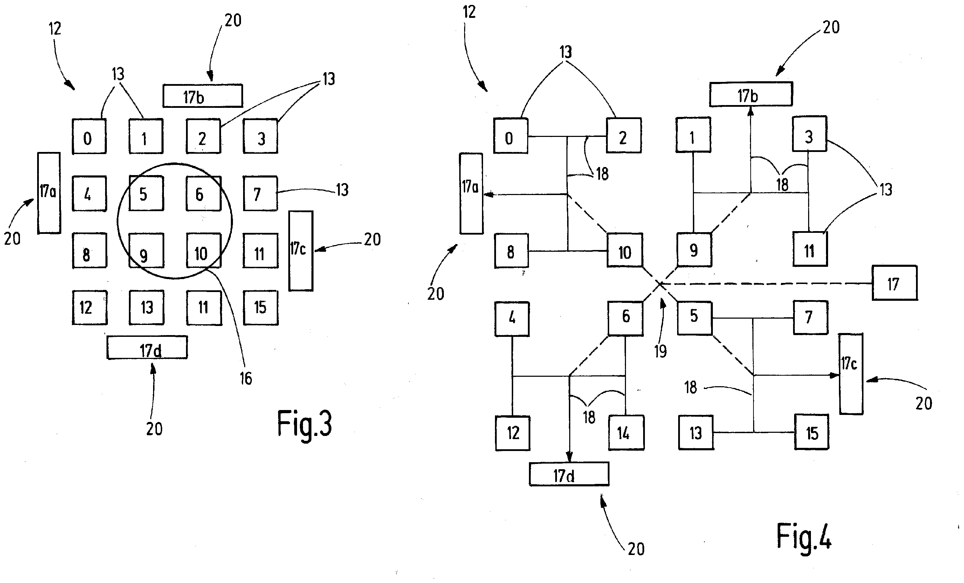

Jedem überwachten Empfangsunterelement (13) eines Empfangselementes (12) ist eine eigene Auswerteeinheit (17) zur Überwachung der Empfangsrate zugeordnet, wie in den Figuren 3 und 4 noch detaillierter ausgeführt wird. Die Empfangsraten der Empfangsunterelemente (13) der überwachten Empfangselemente (12) der ersten Spalte 0 werden gleichzeitig ausgewertet.

Jeder Zeile (14) von Empfangselementen (12) ist eine eigene Auswerteeinheit (17), und zwar einem Time-to-Digital Converter (20), zur Distanzmessung zugeordnet, die mithilfe von Multiplexing und der sequentiellen Ansteuerung, alle Empfangselemente (12) der jeweiligen Zeile auswerten kann.

Ferner umfasst die Vorrichtung (10) eine Einheit (21) zur Bestimmung der Empfangsraten. Die bestimmten Empfangsraten werden in einer Tabelle (23) hinterlegt. Ferner werden die Daten einer Objekterkennungseinheit (25) zugeführt. Die Daten der Tabelle (23), die die zeitliche Veränderung der überwachten Empfangsraten zeigen, werden einer Steuereinheit (22) für die Empfangselemente (12) und/oder Empfangsunterelemente (13) zugeführt. Mithilfe der Steuereinheit (22) können die Koordinaten der Empfangselemente (12) und/oder Empfangsunterelemente (13) neu definiert werden. Ferner umfasst die Vorrichtung (10) eine Konfigurationseinheit (24), die die Koordinaten der Empfangselemente und/oder Empfangsunterelemente ursprünglich festgelegt hat.

Auch in den anderen überwachten Spalten der Empfangsmatrix (11) der Figur 2 ist die Position der Abbildung (16) eines Messpulses als Kreis eingezeichnet gezeigt. Sobald die entsprechende Spalte der Sendematrix angesteuert wird, sollten die entsprechenden Empfangselemente (12) genau an dieser Stelle ausgeleuchtet werden.

Figur 3 zeigt eine Draufsicht auf ein Empfangselement (12) der Empfangsmatrix (11) aus Figur 2.

Die Empfangsunterelemente (13) mit den Ziffern 0 bis 15 sind eindeutig zu sehen. Den unterschiedlichen Empfangsunterelementen (13) sind vier Auswerteeinheiten (17) zugeordnet. Und zwar sind vier Empfangsunterelemente (13) jeweils einer Auswerteeinheit (17) zugeordnet. Im Detail ist den Empfangsunterelementen 0, 2, 8 und 10 eine erste Auswerteeinheit (17a) zugeordnet, während den Empfangsunterelementen 1, 3, 9 und 11 eine zweite Auswerteeinheit (17b) zugeordnet ist. Eine dritte Auswerteeinheit (17c) ist den Empfangselementen 4, 6, 12 und 14 zugeordnet, während eine vierte Auswerteeinheit (17d) den Empfangselementen 5, 7, 13 und 15 zugeordnet ist. Da allerdings nur die Empfangsunterelemente (13) 5, 6, 9 und 10 aktiviert sind, ist den aktivierten und überwachten Empfangsunterelementen (13) jeweils eine eigene Auswerteeinheit (17) zugeordnet, sodass die Detektionsraten von jeweils genau einem überwachten Empfangsunterelement (13) ausgewertet werden können.

Ferner ist in Figur 3 die Abbildung (16) eines Messpulses auf die Empfangsmatrix (11), genauer dem dargestellten Empfangselement (12), zu sehen. Sollte sich eine Fehlausrichtung zwischen Sendematrix und Empfangsmatrix (11) ergeben, würde sich die Abbildung (16) des Messpulses auf die Empfangsmatrix (11), hier des Empfangselementes (12) ergeben. Sollte sich die Abbildung (16) beispielsweise nach rechts verschieben, würde die Empfangsraten der überwachten Empfangsunterelemente 5 und 9 abnehmen, während die Empfangsraten der überwachten Empfangsunterelemente (13) 6 und 10 zunehmen würde. Es kann somit durch Überwachung der Empfangsraten eine Fehlausrichtung festgestellt werden.

In Figur 4 ist die Verschaltung der Empfangsunterelemente (13) des Empfangselementes (12) der Figur 3 zu sehen. Die Empfangsunterelemente (13), die derselben Auswerteeinheit (17) zugeordnet sind, sind jeweils über Leitungen (18) mit der jeweiligen Auswerteeinheit (17) verbunden. Über einen gemeinsamen Knotenpunkt (19) fließen die Daten an eine gemeinsame Auswerteeinheit (17) für die jeweilige Zeile (14), die der eigentlichen Distanzmessung dient (siehe Figur 2).

### Bezugszeichenliste

- 100: Verfahren
- 101: Überwachung von Empfangsraten von reflektierten und empfangenen Messpulsen von Empfangsunterelementen der Empfangsmatrix
- 102: Definition von Empfangselementen und/oder Empfangsunterelementen
- 103: Zuordnung von Sendeelementen der Sendematrix zu Empfangselementen der Empfangsmatrix
- 104: Definition von zu überwachenden Empfangselementen und Unterempfangselementen
- 105: Zuordnung einer Auswerteeinheit zu jeder der überwachten Empfangsunterelemente eines Empfangselementes
- 106: Deaktivieren von nicht überwachten Empfangsunterelementen
- 107: Aussenden von Messpulsen
- 108: Reflektion von ausgesandten Messpulsen an mindestens einem Objekt
- 109: Empfangen von reflektierten Messpulsen
- 110: Bestimmung der Empfangsraten der überwachten Empfangsunterelemente

- 111: Eintragen der Empfangsraten in eine Tabelle
- 112: Feststellen einer Fehlausrichtung zwischen der Sendematrix und der Empfangsmatrix
- 113: Neudefinition von Empfangselementen und/oder Empfangsunterelementen
- 114: Neuzuordnung von Sendeelementen zu Empfangselementen

- 10: Vorrichtung
- 11: Empfangsmatrix
- 12: Empfangselemente
- 13: Empfangsunterelemente
- 14: Zeilen
- 15: Spalten
- 16: Abbildung eines Messpulses auf die Empfangsmatrix
- 17: Auswerteeinheiten
- 17a: erste Auswerteeinheit
- 17b: zweite Auswerteeinheit
- 17c: dritte Auswerteeinheit
- 17d: vierte Auswerteeinheit
- 18: Leitung
- 19: Knotenpunkt

- 20: Time-to-Digital Converter
- 21: Einheit zur Bestimmung der Empfangsraten
- 22: Steuereinheit für Empfangselemente und/oder Empfangsunterelemente
- 23: Tabelle
- 24: Konfigurationseinheit
- 25: Objekterkennungseinheit

## Patentansprüche

1. Verfahren (100) zur optischen Distanzmessung,
wobei das Verfahren (100) das Aussenden (107) von Messpulsen mittels einer Sendematrix umfassend eine Vielzahl von Sendeelementen, die Reflektion (108) von ausgesandten Messpulsen an mindestens einem Objekt und das Empfangen (109) von reflektierten Messpulsen mittels einer Empfangsmatrix (11) umfasst,
wobei die Empfangsmatrix (11) eine Vielzahl von Empfangselementen (12) jeweils umfassend eine Vielzahl von Empfangsunterelementen (13) umfasst, **dadurch gekennzeichnet, dass**
das Verfahren eine Überwachung (101) von Empfangsraten von Empfangsunterelementen (13) der Empfangsmatrix (11) zum Feststellen (112) einer Fehlausrichtung zwischen der Sendematrix und der Empfangsmatrix (11) umfasst.

2. Verfahren (100) nach Anspruch 1,
**dadurch gekennzeichnet, dass**
es sich bei den Empfangselementen (12) um Pixel und bei den Empfangsunterelementen (13) um Subpixel handelt.

3. Verfahren (100) nach einem der Ansprüche 1 oder 2,
**dadurch gekennzeichnet, dass**
das Verfahren (100) zur Navigation eines Fahrzeuges eingesetzt wird, wobei die Überwachung (101) während einer Fahrt des Fahrzeuges durchgeführt wird.

4. Verfahren (100) nach einem der vorherigen Ansprüche,
**dadurch gekennzeichnet, dass**
zur Überwachung (101) nicht überwachte Empfangsunterelemente (13) deaktiviert werden.

5. Verfahren (100) nach einem der vorherigen Ansprüche,
**dadurch gekennzeichnet, dass**
die Empfangsraten von jeweils mindestens zwei Empfangsunterelementen (13) von mindestens drei, bevorzugterweise mindestens fünf, am meisten bevorzugt mindestens neun, Empfangselementen (12) überwacht werden.

6. Verfahren (100) nach einem der vorherigen Ansprüche,
**dadurch gekennzeichnet, dass**
die Empfangsraten von mindestens zwei, insbesondere mindestens drei, am meisten bevorzugt mindestens vier, Empfangsunterelementen (13) pro Empfangselement (12) überwacht werden.

7. Verfahren (100) nach einem der vorherigen Ansprüche,
**dadurch gekennzeichnet, dass**
das Verfahren (100) die Definition (102) von Empfangselementen und/oder Empfangsunterelementen umfasst,
wobei das Verfahren (100) bei Feststellen (112) einer Fehlausrichtung zwischen der Sendematrix und der Empfangsmatrix (11) eine Neudefinition (113) von Empfangselementen (12) und/oder Empfangsunterelementen (13) umfasst.

8. Verfahren (100) nach einem der vorherigen Ansprüche,
**dadurch gekennzeichnet, dass**
das Verfahren (101) die Zuordnung (105) von Sendeelementen der Sendematrix zu Empfangselementen (12) der Empfangsmatrix (11) umfasst,
wobei das Verfahren (100) bei Feststellen (112) einer Fehlausrichtung zwischen der Sendematrix und der Empfangsmatrix (11) eine Neuzuordnung (114) von Sendeelementen zu Empfangselementen umfasst.

9. Verfahren (100) nach einem der vorherigen Ansprüche,
**dadurch gekennzeichnet, dass**
die Empfangsraten der überwachten Empfangsunterelemente (13) eines Empfangselementes (12) mittels einer jeweils zugeordneten Auswerteeinheit (17) bestimmt werden.

10. Verfahren (100) nach einem der vorherigen Ansprüche,
**dadurch gekennzeichnet, dass**
die Empfangselemente (12) der Empfangsmatrix (11) in Zeilen (14) und Spalten (15) angeordnet sind,
wobei die Empfangsraten von überwachten Empfangsunterelementen (13) von innerhalb derselben Zeile (14) oder Spalte (15) angeordneten Empfangselementen (12) gleichzeitig ausgewertet werden.

11. Verfahren (100) nach einem der vorherigen Ansprüche,
**dadurch gekennzeichnet, dass**
Empfangsraten der überwachten Empfangsunterelemente (13) in einer Tabelle (23) hinterlegt werden.

12. Vorrichtung (10) zur optischen Distanzmessung,
wobei die Vorrichtung (10) eine Sendematrix zum Aussenden von Messpulsen umfassend eine Vielzahl von Sendeelementen und eine Empfangsmatrix (11) umfassend eine Vielzahl von Empfangselementen (12) zum Empfangen von reflektierten Messpulsen aufweist,
wobei die Empfangselemente (12) jeweils eine Vielzahl von Empfangsunterelementen (13) umfassen,
**dadurch gekennzeichnet, dass**
die Vorrichtung (10) zur Überwachung von Empfangsraten von Empfangsunterelementen (13) der Empfangsmatrix (11) zum Feststellen (112) einer Fehlausrichtung zwischen der Sendematrix und der Empfangsmatrix (11) ausgebildet ist.

13. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 11, gegebenenfalls im Zusammenspiel mit einer Vorrichtung (10) gemäß Anspruch 12, durchzuführen.

14. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 11, gegebenenfalls im Zusammenspiel mit einer Vorrichtung (10) gemäß Anspruch 12, durchzuführen.
